# FASCICULE DE BREVET EUROPEEN

(11) **EP 1 267 092 B1**
(45) Date de publication et mention de la délivrance du brevet: **27.02.2008**
(21) Numéro de dépôt: 02291428.7
(22) Date de dépôt: 10.06.2002
(51) Int. Cl.: F16G 11/06, G02B 6/44, H01R 4/46

(54) **Bride universelle pour élément cylindrique en particulier pour cable**
Universalklemme für zylinderförmiges Bauteil, insbesondere für Kabel
Universal collar for cylindrical element especially for cable

(30) Priorité: 15.06.2001 FR 0108142
(43) Date de publication de la demande: 18.12.2002
(73) Titulaire: Nexans, 75008 Paris (FR)
(72) Inventeur: Vincent, Alain, 77230 Juilly (FR); Apere, Rodolphe, 78570 Andresy (FR)
(74) Mandataire: Lenne, Laurence

(56) Documents cités:
- EP-A- 0 211 710
- BE-A- 412 553
- CH-A- 675 753
- DE-U- 7 819 892
- DE-U- 9 213 835
- FR-A- 2 777 333
- GB-A- 643 812

## Description

La présente invention se rapporte à une bride universelle pour élément cylindrique en particulier pour câble.

Elle concerne plus précisément un ensemble de brides de fixation d'un élément cylindrique constituées chacune d'un bloc pourvu sur une de ses faces d'une gorge destinée à recevoir l'élément cylindrique et de moyens de serrage.

De telles brides connues sont constituées d'un bloc de métal usiné et sont en général utilisées par paire. L'élément cylindrique, en particulier un câble d'énergie ou à fibres optiques, est enserré entre deux brides et reçu dans les gorges cylindriques correspondantes. Actuellement, ces brides sont réalisées à l'unité avec un diamètre de gorge déterminé.

De telles brides sont fabriquées par usinage, car seraient trop chères à fabriquer par moulage. A chaque diamètre de câble correspond une bride et donc une pièce à gérer, en particulier en ce qui concerne le stockage et le montage.

Par ailleurs, le document de brevet DE 78 19 892 décrit un ensemble de brides de fixation d'un élément cylindrique constituées chacune d'un bloc pourvu de moyens de serrage, l'ensemble comportant plusieurs brides reliées les unes aux autres par au moins un élément sécable, les brides étant disposées de façon alignées les unes à côté des autres pour former une barrette de brides.

Le document de brevet FR 2 777 333 quant à lui divulgue un mors présentant des gorges de dimensions différentes.

L'invention résout le problème ci-dessus en proposant un ensemble unique qui permette la fixation d'une plage très étendue de diamètre de câbles. Plus précisément comme il sera explicité plus loin cet ensemble peut permettre de remplacer jusqu'à vingt références de brides individuelles tout en ayant un coût inférieur à celui d'une seule bride de l'art antérieur.

Pour ce faire, selon l'invention, lesdites brides sont disposées de façon alignée les unes à côté des autres suivant leur axe longitudinal et pourvues sur une de leurs faces d'une gorge destinée à recevoir l'élément cylindrique, les dimensions de ces gorges étant différentes et croissantes de la première bride à la dernière bride.

Cet élément sécable peut être sectionné manuellement ou avec un outil tel qu'une scie ou un tournevis. De façon classique, il est avantageusement constitué de fines languettes de connexion.

De préférence, chaque gorge comporte une portion de fond de gorge de section transversale circulaire prolongée de chaque côté par deux portions d'extrémité de section transversale droite inclinée.

Cette forme des gorges augmente encore la plage de diamètres de câble pouvant être traitée. En effet, cette forme peut assurer par exemple, pour une seule bride, la fixation d'une plage variant de 2 à 5,5 mm, comme il sera vu plus loin.

Avantageusement, chaque gorge est pourvue de rainures parallèles entre elles et perpendiculaires à l'axe longitudinal de la gorge.

Ces rainures assurent une excellente pression contre le câble et permettent une rétention d'au moins 100 kg, sans détérioration du câble.

De façon classique en soi, lesdits moyens de serrage sont constitués d'alésages destinés à recevoir chacun un boulon.

L'ensemble est avantageusement en métal moulé et de préférence en zamak.

Selon l'application préférée de l'invention, l'élément cylindrique est un câble à fibres optiques, et plus précisément il peut être un câble de garde à fibres optiques incorporées destiné à équiper un appareillage électrique.

L'invention est décrite ci-après plus en détail à l'aide de figures ne représentant qu'une mode de réalisation préféré de l'invention.

Les figures 1 et 2 sont des vues en perspective, de dessus et de dessous, d'un ensemble de brides conforme à l'invention.

Les figures 3, 4 et 5 sont des vues de côté, de dessus et de dessous d'un ensemble de brides conforme à l'invention.

La figure 6 est une vue de détail en perspective.

Les figures 7 et 8 sont des vues en perspective d'exemples de montage de brides conformes à l'invention.

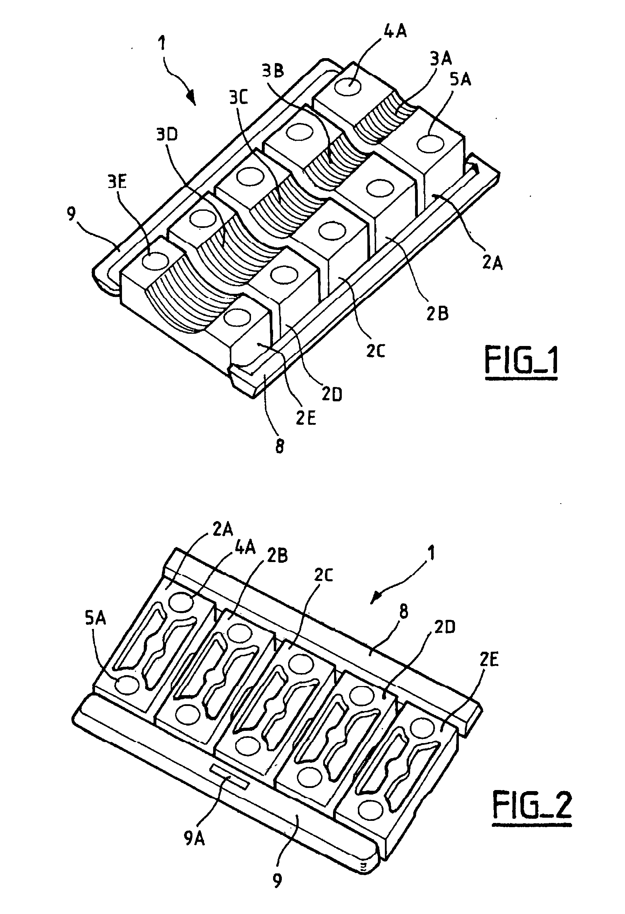

Comme visible sur les figures 1 à 5, l'invention concerne un ensemble 1 de brides 2A à 2E de fixation d'un élément cylindrique constituées chacune d'un bloc pourvu sur une de ses faces d'une gorge 3A à 3E destinée à recevoir l'élément cylindrique et de moyens de serrage.

Les gorges sont centrées sur chaque bloc et de façon classique en soi, les moyens de serrage sont constitués de deux alésages 4A et 5A destinés à recevoir chacun un boulon et disposés de chaque côté de la gorge correspondante 3A.

L'ensemble 1 comporte plusieurs brides 2A à 2E dont les dimensions des gorges sont différentes et reliées les unes aux autres par au moins un élément sécable. Cet élément sécable peut être sectionné manuellement ou avec un outil tel qu'un tournevis. De façon classique, il est avantageusement constitué de fines languettes de connexion 6 et 7.

Les brides sont disposées de façon alignée les unes à côté des autres pour former une barrette de brides, la dimension de la gorge étant croissante de la première bride 3A à la dernière bride 3E.

Selon le mode de réalisation représenté sur les figures 1 et 2, il est obtenu par moulage deux bandes latérales 8 et 9 disposées le long de la barrette et reliées aux brides par des languettes sécables. Au moins l'une de ces bandes 9 comporte une cavité 9A destinée à faciliter le détachement de cette bande 9, par introduction d'une pointe de tournevis par exemple dans cette cavité 9A.

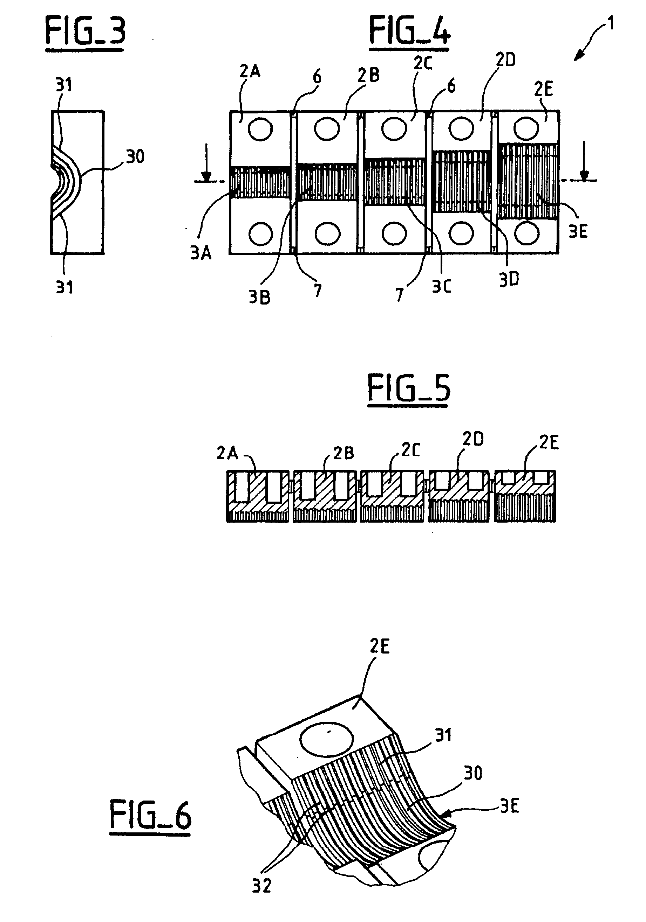

Sur les figures 3 à 5, la barrette est représentée sans ces bandes latérales.

L'ensemble 1 est avantageusement en métal moulé et de préférence en zamak.

La section des gorges 3 est conçue pour permettre la fixation d'une plage de diamètres de câbles. Pour ce faire, comme particulièrement visible sur les figures 3 et 6, chaque gorge 3 comporte une portion 30 de fond de gorge de section transversale circulaire prolongée de chaque côté par deux portions 31 d'extrémité de section transversale droite inclinée

Chaque gorge 3 est pourvue de rainures 32 parallèles entre elles et perpendiculaires à l'axe longitudinal de la gorge.

A titre d'exemple, une barrette comme représentée sur les figures 3 à 5 peut permettre la fixation de câbles de diamètre allant de 7,5 à 25 mm. La première bride 2A permet la fixation de câbles de 7,5 à 9,5 mm, la deuxième bride 2B de câbles de 9,5 à 12 mm, la troisième bride 2C de câbles de 12 à 15,5 mm, la quatrième bride 2D de câbles de 15,5 à 19,5 mm, la cinquième bride 2E de câbles de 19,5 à 25 mm (avec une tolérance de plus ou moins 0,5 mm).

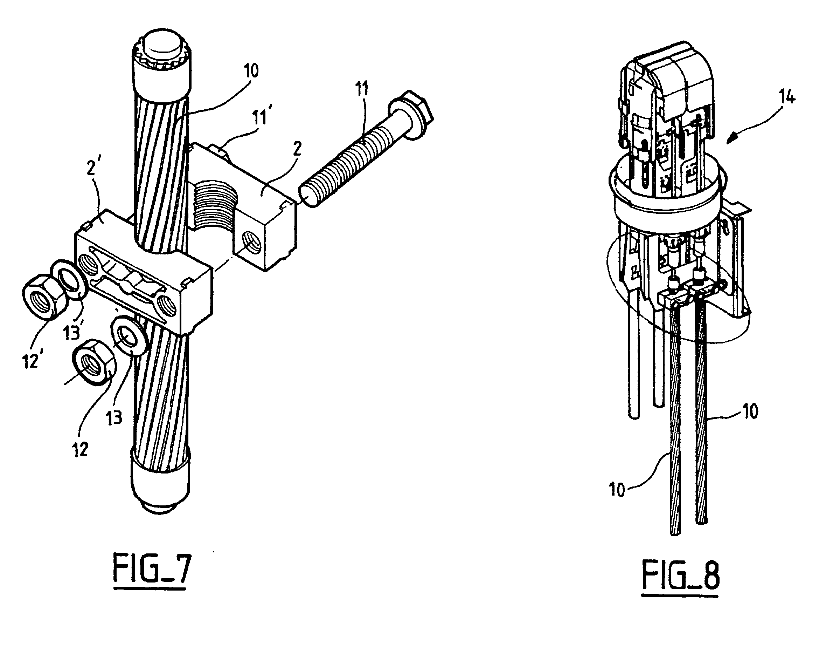

Une application préférée de l'invention est décrite sur la figure 7. L'élément cylindrique est un câble à fibres optiques, et plus précisément un câble de garde à fibres optiques incorporées 10 destiné à équiper un appareillage électrique, par exemple un dispositif de raccordement 14 de câble par épissurage sur une installation aérienne, comme réprésentée sur la figure 8.

Deux brides 2 et 2' sont choisies dans des barrettes 1 au diamètre du câble de garde et sont montées pour enserrer le câble dans leur gorge. Deux boulons 11 et 11' sont mis en place dans les alésages des brides et par serrage de deux écrous 12 et 12', avec interposition de rondelles 13 et 13' viennent serrer les deux brides contre le câble.

Par fixation des brides sur une pièce support, par exemple grâce à un organe retenu par les boulons par son interposition entre la tête de ceux-ci et les brides, ces brides peuvent servir de support de câbles comme représenté sur la figure 8 et permettre une tenue mécanique à la traction d'au moins 100 kg.

## Revendications

1. Ensemble de brides de fixation d'un élément cylindrique constituées chacune d'un bloc (2) pourvu de moyens de serrage, l'ensemble comportant plusieurs brides (2) reliées les unes aux autres par au moins un élément sécable (6, 7), les brides (2) étant disposées de façon alignées les unes à côté des autres pour former une barrette (1) de brides, **caractérisé en ce que** lesdites brides (2) sont disposées de façon alignée les unes à côté des autres suivant leur axe longitudinal et pourvues sur une de leurs faces d'une gorge (3) destinée à recevoir l'élément cylindrique, les dimensions de ces gorges (3) étant différentes et croissantes de la première bride (2A) à la dernière bride (2E).

2. Ensemble selon la revendication précédente, **caractérisé en ce que** chaque gorge (3) comporte une portion (30) de fond de gorge de section transversale circulaire prolongée de chaque côté par deux portions (31) d'extrémité de section transversale droite inclinée.

3. Ensemble selon l'une quelconque des revendications précédentes, **caractérisé en ce que** chaque gorge (3) est pourvue de rainures (32) parallèles entre elles et perpendiculaires à l'axe longitudinal de la gorge (3).

4. Ensemble selon l'une quelconque des revendications précédentes, **caractérisé en ce que** lesdits moyens de serrage sont constitués d'alésages (4, 5) destinés à recevoir chacun un boulon (11,11').

5. Ensemble selon l'une quelconque des revendications précédentes, **caractérisé en ce qu'**il est en métal moulé.

6. Ensemble selon la revendication 5, **caractérisé en ce qu'**il est constitué de zamak.

7. Ensemble selon l'une quelconque des revendications précédentes, **caractérisé en ce que** l'élément cylindrique est un câble à fibres optiques.

8. Ensemble selon la revendication 7, **caractérisé en ce que** l'élément cylindrique est un câble de garde à fibres optiques incorporées (10) destiné à équiper un appareillage électrique (14).

## Claims

1. A set of clamps for attaching a cylindrical component, each consisting of a block (2) provided with tightening means, the set including several clamps (2) connected to each other through at least one cuttable component (6, 7), the clamps (2) being positioned aligned side by side in order to form a bar (1) of clamps, **characterized in that** said clamps (2) are positioned aligned side by side along their longitudinal axis and provided on one of their faces with a groove (3) intended to receive the cylindrical component, the dimensions of these grooves (3) being different and increasing from the first clamp (2A) to the last clamp (2E).

2. The set according to the precedent claim, **characterized in that** each groove (3) includes a groove bottom portion (30) with a circular transverse section, extended on either side with two end portions (31) with a tilted transverse cross-section.

3. The set according to any of the precedent claims, **characterized in that** each groove (3) is provided with channels (32) parallel to each other and perpendicular to the longitudinal axis of the groove (3).

4. The set according to any of the precedent claims, **characterized in that** said tightening means consist of bores (4, 5) each intended to receive a bolt (11, 11').

5. The set according to any of the precedent claims, **characterized in that** it is in cast metal.

6. The set according to claim 5, **characterized in that** it consists of zamak.

7. The set according to any of the precedent claims, **characterized in that** the cylindrical component is a cable with optical fibers.

8. The set according to claim 7, **characterized in that** the cylindrical component is an earth-cable with incorporated optical fibers (10) intended to equip an electrical apparatus (14).

## Patentansprüche

1. Einheit von Befestigungsklemmen für ein zylinderförmiges Bauteil, die jeweils aus einem Block (2) gebildet ist, der mit Festspannmitteln versehen ist, wobei die Einheit mehrere Klemmen (2) aufweist, die miteinander mittels wenigstens eines teilbaren Bauteils (6, 7) verbunden sind, wobei die Klemmen (2) so angeordnet sind, dass sie seitlich miteinander ausgerichtet sind, um eine Reihe (1) aus Klemmen zu bilden, **dadurch gekennzeichnet, dass** die Klemmen (2) seitlich nebeneinander entlang ihrer Längsachse ausgerichtet sind und auf einer ihrer Seiten mit einer Hohlkehle (3) ausgestattet sind, die dazu bestimmt ist, ein zylinderförmiges Element aufzunehmen, wobei die Abmessungen der Hohlkehlen (3) unterschiedlich sind und von der ersten Klemme (2A) zur letzten Klemme (2E) größer werden.

2. Einheit gemäß dem vorausgegangenen Anspruch, **dadurch gekennzeichnet, dass** jede Hohlkehle (3) einen Bodenbereich (30) der Hohlkehle mit kreisförmigem Querschnitt aufweist, der auf jeder Seite von zwei Endbereichen (31) mit geradem geneigtem Querschnitt verlängert wird.

3. Einheit gemäß einem der vorausgegangenen Ansprüche, **dadurch gekennzeichnet, dass** jede Hohlkehle (3) mit Rillen (32) versehen ist, die zueinander parallel und senkrecht zur Längsachse der Hohlkehle (3) sind.

4. Einheit gemäß einem der vorausgegangenen Ansprüche, **dadurch gekennzeichnet, dass** die Festspannmittel aus Bohrungen (4, 5) gebildet sind, die dazu dienen, jeweils einen Bolzen (11, 11') aufzunehmen.

5. Einheit gemäß einem der vorausgegangenen Ansprüche, **dadurch gekennzeichnet, dass** er aus einem gegossenen Metall hergestellt ist.

6. Einheit gemäß Anspruch 5, **dadurch gekennzeichnet, dass** sie aus Zamak gebildet ist.

7. Einheit gemäß einem der vorausgegangenen Ansprüche, **dadurch gekennzeichnet, dass** das zylinderförmige Bauteil ein Kabel aus Lichtwellenleitern ist.

8. Einheit gemäß Anspruch 7, **dadurch gekennzeichnet, dass** das zylinderförmige Bauteil ein Schutzkabel aus darin enthaltenen Lichtwellenleitern (10) ist, das dazu dient, in einem Schaltgerät (14) vorgesehen zu werden.
